# EUROPEAN PATENT SPECIFICATION

(11) **EP 3 788 205 B1**
(45) Date of publication and mention of the grant of the patent: **20.08.2025**
(21) Application number: 18721371.5
(22) Date of filing: 30.04.2018
(51) Int. Cl.: E02F 9/24, E02F 9/26

(54) **SYSTEM AND METHOD FOR SELECTIVELY DISPLAYING IMAGE DATA IN A WORKING MACHINE**
SYSTEM UND VERFAHREN ZUR SELEKTIVEN DARSTELLUNG VON BILDDATEN IN EINER ARBEITSMASCHINE
SYSTÈME ET PROCÉDÉ POUR AFFICHER SÉLECTIVEMENT DES DONNÉES D'IMAGE DANS UNE MACHINE DE TRAVAIL

(43) Date of publication of application: 10.03.2021
(73) Proprietor: Volvo Construction Equipment AB, 631 85 Eskilstuna (SE)
(72) Inventor: SKILLSÄTER, Calle, 644 36 Torshälla (SE); NORRMAN, Andreas, 732 34 Arboga (SE)
(74) Representative: Kransell & Wennborg KB
(86) International application number: PCT/EP2018/061023
(87) International publication number: WO 2019/210931

(56) References cited:
- EP-A1- 2 631 374
- EP-A1- 2 716 821
- WO-A1-2016/004306
- JP-A- 2013 159 930
- US-A1- 2012 327 261
- US-A1- 2017 191 243

## Description

### TECHNICAL FIELD

The invention relates to a system and a method for selectively displaying image data in a working machine. The invention also relates to a working machine comprising the system.

The invention is applicable on working machines provided with a movable unit, e.g. excavators. Although the invention will mainly be described with respect to an excavator, the invention is not restricted to this particular machine, but may also be used in other working machines, such as articulated haulers, wheel loaders, dump trucks, trucks with cranes, pipe-layer machines, backhoe loaders etc.

### BACKGROUND

Working machines often operate in locations and situations forming risk situations, such as defined in WO 2016/004306 A1. Such risks include risks that may cause damage or injuries for persons or objects in the vicinity of the working machines and/or for the working machine itself and its operator.

In order to help the operator of the working machine to prevent such damage or injuries, image data from one or more cameras covering a surrounding of the working machine are shown on a display. However, there is a risk that the operator will be overloaded with information. Hence, there is a desire to only show information which is relevant for the operator at each point of time and for each work scenario.

Document US 2016/0305094 A1 discloses an apparatus and a method for selecting a screen mode for each operation mode in construction equipment. The apparatus provides an optimal screen which can determine an operation mode using a boom angle and a turning angle and a driving speed of an upper body, remove a blind spot according to an operation mode, and improve safety.

Hence, with the apparatus and method of US 2016/0305094 A1, the screen displays videos depending on parameters of the working machine itself.

### SUMMARY

It is an object of the invention to overcome or ameliorate at least one of the disadvantages of the prior art, or to provide a useful alternative.

This object is achieved by a system according to claim 1.

The system, working machine and/or method according to the invention not only consider/s parameters of the working machine itself but also a current environment of the working machine, when selecting what information to display.

According to a first aspect of the present invention, there is provided a system for selectively displaying image data in a working machine. The working machine comprises a movable unit, which is movable in relation to a ground portion of the working machine. The working machine further comprises an image capturing arrangement and a display adapted to display image data captured by the image capturing arrangement. The system comprises a position determination means adapted to determine a position of the movable unit. The system further comprises a control unit configured to compare the position of the movable unit to a risk zone associated with a current environment of the working machine and to issue a signal to the working machine to display image data of the risk zone captured by the image capturing arrangement on the display, when the position of the movable unit is within the risk zone.

The working machine is typically from the fields of industrial construction machines or construction equipment. Typical examples are excavators, articulated haulers, wheel loaders, dump trucks, trucks with cranes, pipe-layer machines, grazers, dozers and backhoe loaders.

When the working machine is in operation, e.g. digging or loading/unloading, the ground portion is normally stationary in relation to a ground surface, on which the working machine is located. The ground portion is the part of the working machine being closest to the ground surface and being in contact with the ground surface, e.g. via ground engaging members, such as wheels or caterpillar treads, comprised in the ground portion. When the working machine is in operation, the ground engaging members are stationary in relation to the ground surface.

The movable unit is a unit being movable in relation to the ground portion of the working machine. The movable unit may be a movable load unit arrangement, which is to be understood as an arrangement of the working machine arranged to move a load or the like. The movable unit may comprise or be constituted by components, such as an upper structure of an excavator, a boom arm, an implement to be attached to the boom arm, a crane, a container of a dump truck, a blade of a grazer or a dozer etc., which are movable in relation to the ground surface.

The working machine comprises an image capturing arrangement with one or more vision sensors, such as a camera or an IR camera, adapted to provide image data. Vision sensors may be located at different sides of the working machine and directed in different directions, such that image data from the vision sensors can be combined to provide an image showing a bird's eye view, e.g. as a 360° view around the working machine.

The working machine also comprises one or more displays adapted to display image data captured by the image capturing arrangement to an operator of the working machine. The display/s is/are typically located in a cabin of the working machine and may comprise one or more screens or may be a head-up display presented on a window of the cabin.

The system comprises at least one position determination means adapted to determine a position of the movable unit. The position may be determined in relation to the ground portion of the working machine, in relation to the current environment or as an absolute position.

The position determination means may comprise, or be constituted by, at least one angular sensor adapted to determine an angular position of the movable unit, e.g. in relation to the ground portion of the working machine and/or relative positions between components of the movable unit. The angular sensor may measure the angle change directly, i.e. be located on the movable unit or may measure the angle change indirectly, i.e. be located elsewhere.

As an alternative or a complement, the position determination means may comprise, or be constituted by, a receiver provided at the movable unit, which receiver is adapted to receive position data from a local positioning system and/or global positioning system, such as GPS. The position data of the movable unit, may be used as is, i.e. as an absolute position, or may be recalculated to a relative position by comparing the position of the movable unit to e.g. a position of the ground portion of the working machine.

The system further comprises a control unit, which may comprise a processor, such as a central processing unit. The control unit may be a computer. The control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

The risk zone is associated with the current environment of the working machine, such that the risk zone depends on the environment in which the working machine is working. Hence, if the working machine is moved to another location, the risk zone will be different. The risk zone is defined as a zone being possible to reach for the movable unit when being moved in relation to the ground portion. Hence, the movable unit is feasible of moving within the risk zone. The risk zone is a zone of increased risk as compared to the rest of the current environment, i.e. the risk is higher in the risk zone than outside the risk zone. The risk may comprise the risk that the movable unit hits an external object or a person being in the risk zone. There may in addition or alternatively be a risk of damages and injuries for the working machine itself and its operator.

The risk zone may comprise a portion of a road, a railroad and/or a sidewalk. There is then a risk that a vehicle, a train, another object and/or a person may be located in the risk zone. Hence, there is then a risk that the movable unit hits the person or the vehicle/ train/ object and gives rise to damages and/or injuries on the person or the vehicle/train/ object. The risk of damages and injuries for the working machine itself and its operator may include the risk of smashing the movable unit into a mountain wall, a building, a cable, a road construction, a mountain wall, a train or a large vehicle.

In order to avoid accidents of hitting an external object or a person being in the risk zone with the movable unit, it is desirable that the operator is able to see what is happening in the risk zone, when the movable unit is within the risk zone. Hence, image data of the risk zone captured by the image capturing arrangement is displayed to the operator on the display, when the movable unit is within the risk zone. The displaying of the image data of the risk zone is controlled by the system for selectively displaying image data in a working machine described herein.

By utilizing the system for selectively displaying image data in a working machine, a system is provided which not only considers parameters associated with the working machine itself but also considers the current environment of the working machine when selecting what information to display to the operator. Thereby, information which is relevant for the operator is shown on the display at each point of time and for each work scenario, which helps to reduce or to avoid the risk of information overload for the operator of the working machine. It is thus ascertained that it is possible for the operator to get a view of the risk zone when desirable, i.e. when the risk is increased due to that the movable unit is within the risk zone. Hence, even if the operator has chosen another view or information to be displayed on the display at that moment, the system will automatically trigger display of the image data of the risk zone on the display in such a situation. The image data may be shown on the whole display or only on a portion of the display.

The control unit may further be configured to issue a signal to the working machine not to display image data captured by the image capturing arrangement on the display, when the position of the movable unit is outside the risk zone. This may contribute to prevent information overload of the operator, since the operator is no longer exposed to this image data when the movable unit is outside the risk zone. As an alternative, the size of the portion of the display showing the image data of the risk zone may be decreased or represented by a symbol on the display.

As an option, there may be defined a pre-warning zone surrounding at least a part of the risk zone. In that case, the control unit of the system may in addition be configured to compare the position of the movable unit to the pre-warning zone and to issue a signal to the working machine to display image data of the risk zone captured by the image capturing arrangement on the display, when the position of the movable unit is within the pre-warning zone.

In many working situations, it may be preferable to have a system adapted to display the image data of the risk zone already when the movable unit is in the pre-warning zone to have a safety margin before the movable unit actually enters the risk zone. The pre-warning zone may suitably be expressed in metres or as a time interval. Purely as an example, the pre-warning zone may have a width in the range of 0-4 metres, preferably 0-3 metres, more preferably 0-2 metres, most preferably 0-1 metre. The width is defined as the shortest distance from the side of the pre-warning zone being next to the risk zone to the other side of the pre-warning zone facing away from the risk zone, i.e. on the side being closest to the working machine. If defined as a time interval, consideration is preferably taken to the velocity, which the movable unit has in the pre-warning zone. Purely as an example, the time interval may be 0-4 s, preferably 0-3 s, more preferably 0-2 s, most preferably 0-1 s.

The risk zone may be defined as a three-dimensional space, which is suitable for a movable unit being movable in three dimensions in relation to the ground portion. As an alternative or a complement, the risk zone may be defined as a two-dimensional space, such as a projection on the ground surface. It is feasible that the risk zone may be located entirely above the ground surface, e.g. comprising an overhead electric cable. In principle, it is enough that the risk zone is delimited at the side facing the working machine, though it is also possible to define the risk zone as a delimited two-or three dimensional space, such as the space occupied by the physical construction plus an optional safety margin.

The risk zone may be defined by means of an object having a pre-definable/pre-defined position, e.g. a physical construction or a virtual geo-fence. In that case, data about the object, data about the risk zone and/or its definition may be sent to the working machine from e.g. an external database, and/or data may be stored in a memory of the working machine. Examples of physical constructions are a road, a railroad, a sidewalk, a building, a bridge, a road construction, a cable for electricity or communication network, or a mountain wall. A virtual geo-fence is a virtual perimeter for a real-world geographic area. The risk zone would then be the portion of that physical construction or virtual geo-fence being possibly reachable by the movable unit.

The optional pre-warning zone may be defined in a corresponding way as for the risk zone. Hence, the pre-warning zone may be defined as a two- or three-dimensional space.

The system for selectively displaying image data in a working machine as described herein may be provided when manufacturing a new working machine. It may also be installed in an existing working machine.

According to a second aspect of the present invention, there is provided a working machine comprising a ground portion, a movable unit, which is movable in relation to the ground portion of the working machine, a display, an image capturing arrangement and the system for selectively displaying image data as described herein.

The movable unit may be movable in two and/or three dimensions in relation to the ground portion of the working machine, e.g. by rotation in two and/or three dimensions. The movement may be complex and may combine linear translations and rotations in two and/or three dimensions.

According to a third aspect of the present invention, there is provided a method for selectively displaying image data in a working machine. The working machine comprises a movable unit, which is movable in relation to a ground portion of the working machine and an image capturing arrangement, e.g. the working machine as described above. The method may be performed by the system as described herein. The working machine may be a working machine as described herein.

The method comprises the steps of:
- determining a position of the movable unit,
- comparing the position of the movable unit with a risk zone associated with a current environment of the working machine, and
- issuing a signal to the working machine to display image data of the risk zone captured by the image capturing arrangement, when the position of the movable unit is within the risk zone.

By performing the method, it is ascertained that it is possible for the operator of the working machine to get a view of the risk zone when desirable, i.e. when the risk is increased due to that the movable unit is within the risk zone. Hence, even if the operator has chosen another view or information to be displayed on the display, the system will automatically trigger display of the image data of the risk zone on the display in such a case.

The step of determining a position of the movable unit may be performed by determining a position of the movable unit in relation to the ground portion of the working machine, e.g. by means of one or more angular sensors or by means of one or more receivers for position data. The step may, as an alternative or complement, comprise determining the position as an absolute position.

The method may comprise the further optional step of:
- defining the risk zone.

The definition of the risk zone may be performed by the operator inputting data to the system, e.g. when the working machine has reached its working position and is stationary and before the work is begun. As an alternative or a complement, data of the risk zone and/or its definition may be sent to the working machine from e.g. an external database and/or may be stored in a memory of the working machine. Moreover, such data may comprise positions of physical constructions, such as a road, a railroad, a sidewalk, a building, a bridge, a road construction, a cable for electricity or communication network, or a mountain wall. Such data may also comprise information about a virtual geo-fence. It would also be feasible that persons or objects are configured to communicate with the working machine, e.g. by sending position data, which may be used to defined the risk zone. As mentioned above, the risk zone may be defined as a two-or three dimensional space.

In case there is defined a pre-warning zone surrounding at least a part of the risk zone, the method may comprise the further steps of:
- comparing the position of the movable unit with the pre-warning zone, and
- issuing a signal to the working machine to display image data of the risk zone captured by the image capturing arrangement, when the position of the movable unit is within the pre-warning zone.

Optionally, the method may further comprise the additional step of:
- defining the pre-warning zone.
This step may be performed in a corresponding way as for the risk zone described above.

In case there is defined a pre-warning zone surrounding at least a part of the risk zone, it is preferred that the step of comparing the position and the step of issuing the signal to display image data are performed in parallel for the risk zone and the pre-warning zone.

As yet an option, the method may comprise the step of:
- issuing a signal to the working machine not to display image data captured by the image capturing arrangement on the display, when the position of the movable unit is outside the risk zone.

If a pre-warning zone is defined, the method may comprise the further step of:
- issuing a signal to the working machine not to display image data captured by the image capturing arrangement on the display, when the position of the movable unit is outside the risk zone and also outside the pre-warning zone.

According to a fourth aspect of the present invention, there is provided a computer program as claimed in claim 12.

According to a fifth aspect of the present invention, there is provided a computer readable medium carrying the computer program above.

The effects and advantages of the second, third, fourth and fifth aspects of the invention are corresponding to those of the first aspect presented above.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 schematically illustrates a working machine, an excavator, comprising a system according to the invention.
Fig. 2 is a top view of the excavator of Fig. 1.
Fig. 3 illustrates a system according to the invention for selectively displaying image data in a working machine.
Fig. 4 illustrates a method according to the invention for selectively displaying image data in a working machine
Fig. 5 schematically illustrates another kind of working machine comprising a system according to the invention.
Fig. 6 schematically illustrates yet another kind of working machine comprising a system according to the invention.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

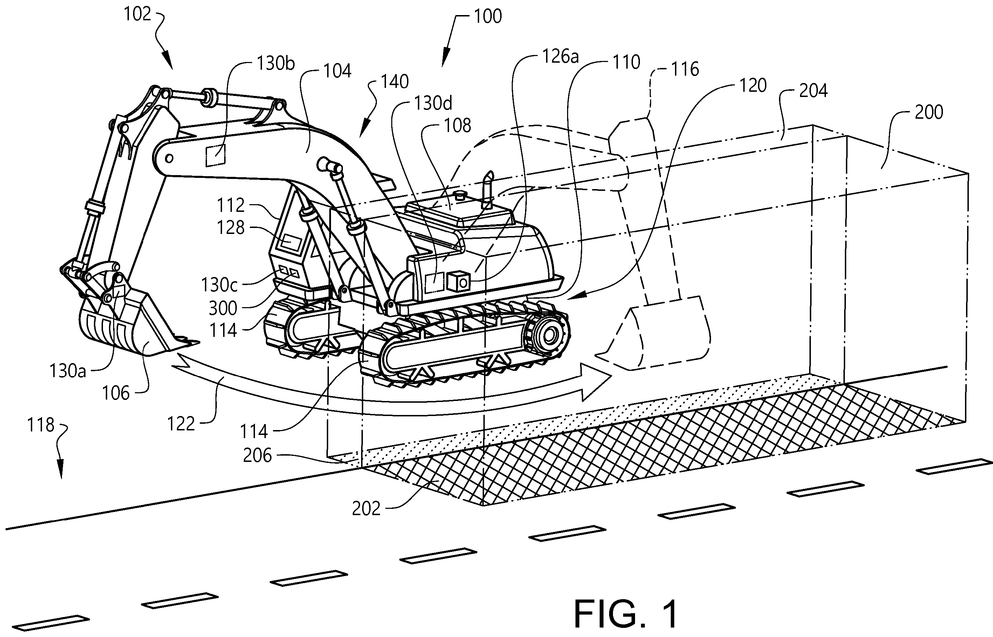

With particular reference to Figure 1, there is provided a working machine in the form of an excavator 100. The excavator 100 comprises a movable load unit arrangement 102, which movable load unit arrangement 102 comprises a boom arm 104 and an implement 106. In the embodiment illustrated in Figure 1, the implement 106 is a bucket, although other implements are conceivable as well, such as a gripping tool. The excavator 100 comprises an upper structure 108 and a lower structure 110, wherein the upper 108 and lower 110 structures are movable relative to each other. In detail, the upper structure 108 is rotatable relative to the lower structure 110 around a substantially vertical geometric axis, not shown, i.e. a horizontal rotation, which is an example of a two-dimensional rotation. As further illustrated in Figure 1, the upper structure 108 comprises a cabin 112 intended for an operator of the excavator 100. The lower structure 110 comprises a pair of ground engaging members 114 in the form of caterpillar treads 114. Other ground engaging members are also conceivable, such as e.g. wheels, etc.

The load unit arrangement 102 is connected to the upper structure 108 of the excavator 100, which makes the load unit arrangement 102 rotatably movable relative to the lower structure 110, as well as relative to a ground surface 118. The load unit arrangement 102 can also be lifted and lowered relative to the ground surface 118, such that the distance between the implement 106 and the ground surface 118 increases or decreases. Also, the implement 106 can be tilted relative to the boom arm 104. These rotations are at least partly vertical rotations. Hence, the movable unit arrangement 102, including its units, e.g. the boom arm 104 and the implement 106, is rotatably movable in relation to the ground portion 120 of the excavator 100, as seen both in two and three dimensions.

When the excavator 100 is to be moved to a new working place, the ground portion 120 is moved in relation to the ground surface 118 by means of the ground engaging members 114.

When the excavator 100 is in operation, e.g. digging as illustrated in Figure 1, the lower structure 110 is normally stationary in relation to the ground surface 118. The ground engaging members 114 are thus stationary. Hence, the lower structure 110 and the ground engaging members 114 together form a ground portion 120 of the excavator 100, which ground portion 120 is stationary in relation to the ground surface 118, when the excavator 100 is in operation. The ground portion 120 is also the part of the excavator 100 being closest to the ground surface 118 and is in contact with the ground surface 118, in Figure 1 via the ground engaging members 114 comprised in the ground portion 120. The upper structure 108 is a movable unit as seen in relation to the ground portion 120. Further, the load unit arrangement 102, as well as its parts, e.g. the boom arm 104 and the implement 106, constitute movable units as seen in relation to the ground portion 120.

As described, the load unit arrangement 102 is movable relative to the lower structure 110, and hence also to the ground portion 120, which in the situation illustrated in Figure 1 is stationary relative to the ground surface 118. Figure 1 further illustrates the movement of the upper structure 108 and the load unit arrangement 102 from a present position, in which the load unit arrangement 102 is shown with solid lines, to a future position 116, shown by dashed lines. The movement from the present position to the future position is indicated by arrow 122 and includes rotation of the upper structure 108 in relation to the lower structure 110, and hence also to the ground portion 120. The movement further includes the movement of the load unit arrangement 102 in relation to the upper structure 108.

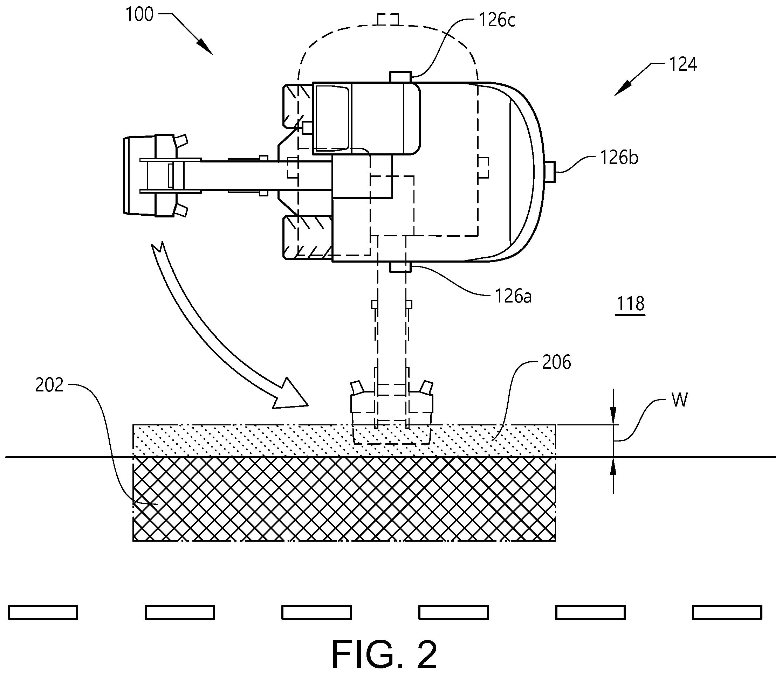

The working machine 100 comprises an image capturing arrangement 124, which in the illustrated embodiment comprises three vision sensors 126a, 126b, 126c located at different sides of the working machine 100, illustrated as a left-hand side, a right-hand side and a rear end side of the working machine 100, and directed in different directions, see Figure 2.

The working machine 100 also comprises one or more displays 128 adapted to display image data captured by the image capturing arrangement 124 to the operator. The display/s is/are typically located in the cabin 112. The image data from the vision sensors 126a, 126b, 126c may be combined to provide an image showing a bird's eye view.

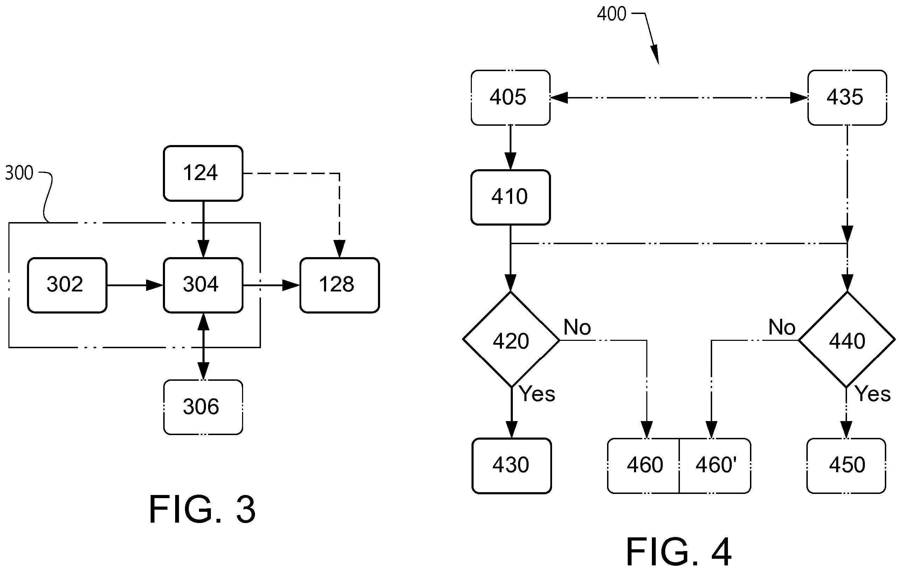

The working machine 100 further comprises a system 300 for selectively displaying image data in a working machine according to the invention. A detailed description of the system 300 and how it is connectable to various modules of the working machine 100 is described in conjunction with Figure 3 below.

The system 300 comprises at least one position determination means 302, adapted to determine a position of a movable unit 102, 104, 106, 108. The position may be determined in relation to the ground portion 120 of the working machine 100 or as an absolute position. The position determination means 302 of the illustrated embodiment comprises at least one angular sensor adapted to determine an angular position of the movable unit 102, 104, 106, 108, e.g. in relation to the ground portion 120 of the working machine 100. In the illustrated embodiment, there are four angular sensors 130a, 130b, 130c, 130d, whereof two angular sensors 130a, 130b are adapted to determine rotation between the different components of the load unit arrangement 102, one angular sensor 130c between the load unit arrangement 102 and the upper structure 108 and one angular sensor 130d between the upper structure 108 and the ground portion 120.

As an alternative or a complementary position determination means 302, one or more receivers may be provided at the movable unit 102, 104, 106, 108, which receivers are adapted to receive position data from a local positioning system and/or global positioning system, such as GPS. The position data of the movable unit 102, 104, 106, 108 may be used as is, i.e. as absolute positions, or may be recalculated to relative positions by comparing the position of the movable unit 102, 104, 106, 108 to a position of the ground portion 120 of the working machine 100.

Figure 1 further illustrates a risk zone 200. The risk zone 200 is associated with a current environment of the working machine 100, such that the risk zone 200 depends on the environment in which the working machine 100 is working. Hence, if the working machine 100 is moved to another location, the risk zone 200 will be different. The risk zone 200 is a zone of increased risk as compared to the rest of the current environment. The risk may comprise the risk that the movable unit 102, 104, 106, 108 hits an external object or a person being in the risk zone 200.

The risk zone 200 may comprise a portion of a road, a railroad and/or a sidewalk. In that case, it is a vehicle, a train or a person may be located in the risk zone 200, and there is then a risk that the movable unit 102, 104, 106, 108 hits the person or external object and gives rise to damages and/or injuries on the person or the external object. There may in addition or alternatively, be a risk of damages and injuries for the working machine 100 itself and its operator, e.g. if smashing the movable unit 102, 104, 106, 108 into a mountain wall, a building, a cable, a road construction, a mountain wall, a train or a large vehicle. The risk is higher in the risk zone 200 than outside the risk zone 200.

The risk zone 200 is possible to reach by the movable unit 102, 104, 106, 108. In the illustrated embodiment of the excavator 100, the possible movement of the implement 106, i.e. the bucket, defines the illustrated risk zone 200. For another case, not illustrated but also involving an excavator, the risk zone may be defined by the rotation of the upper structure 108, e.g. due to that a rear end of the upper structure 108 can rotate out over e.g. a sidewalk.

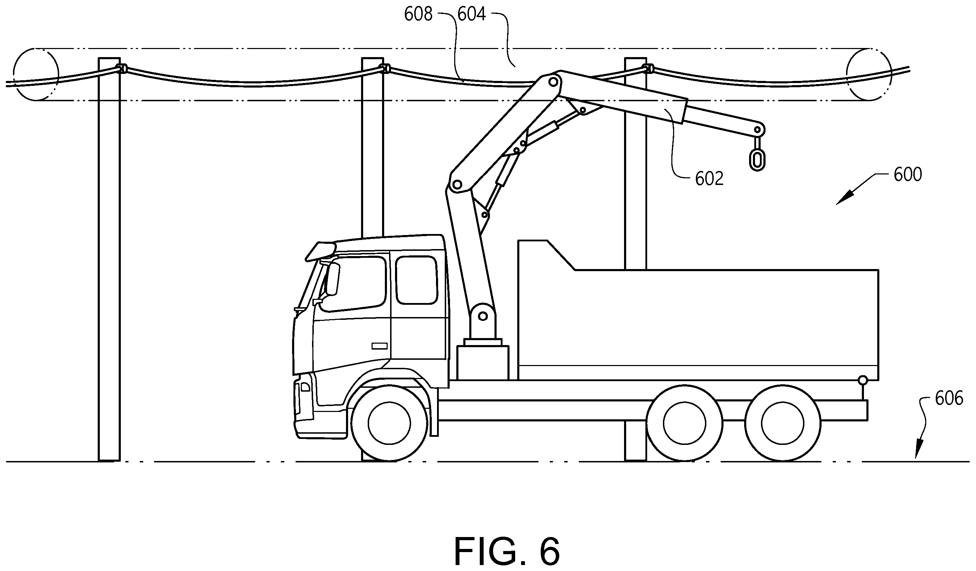

The risk zone 200 is in Figure 1 indicated as a three-dimensional space, which is suitable for a movable unit 102, 104, 106, 108 being movable in three dimensions in relation to the ground portion 120, as for the excavator illustrated in Figure 1. As an alternative or a complement, the risk zone may be defined as a two-dimensional projection 202 on the ground surface 118, see the top view of Figure 2. However, it is also feasible that the risk zone may be located entirely above the ground surface 118, e.g. comprising an overhead electric cable, as in Figure 6.

In order to avoid accidents of hitting an external object or a person being in the risk zone 200 with the movable unit 102, 104, 106, 108, it is desirable that the operator is able to see what is happening in the risk zone 200, when the movable unit 102, 104, 106, 108 is within the risk zone 200. Hence, image data of the risk zone 200 captured by image capturing arrangement 124 is displayed on the display, when the movable unit 102, 104, 106, 108 is within the risk zone 200. Further, in order to avoid information overload of the operator, it may also be desirable that no such image data is displayed, when the movable unit 102, 104, 106, 108 is outside the risk zone 200. Thereby only information which is relevant for the operator is shown on the display 128 at each point of time and for each work scenario. The displaying of the image data of the risk zone 200 is controlled by the system 300 for selectively displaying image data in a working machine described herein.

In the illustrated exemplary embodiment seen in Figures 1 and 2, there is a pre-warning zone 204, surrounding at least a part of the risk zone 200, the pre-warning zone 204 being an optional feature. Also the pre-warning zone 204 is associated with the current environment of the working machine 100, such that the pre-warning zone 204 depends on the environment in which the working machine 100 is working. In the illustrated embodiment, the risk zone 200 comprises a portion of a road, a railroad and/or a sidewalk. The pre-warning zone 204 extends at the side of the risk zone 200 being closest to the working machine 100. Similar to the definition of the risk zone 200, the pre-warning zone 204 is defined as a three-dimensional space. As an alternative or a complement, the pre-warning zone 204 may be defined as its two-dimensional projection 206 on the ground surface 118, which is illustrated in the top view of Figure 2. In the illustrated embodiment of Figures 1 and 2, a portion of the movable unit, represented by a distal end portion of the boom arm 104 and the implement 106, has moved into the pre-warning zone 204 but not yet into the risk zone 200.

In many working situations, it may be preferable to have a system 300 adapted to display the image data of the risk zone 200 already when the movable unit 102, 104, 106, 108 is in the pre-warning zone 204 to have a safety margin before the movable unit 102, 104, 106, 108 actually enters the risk zone 200. The pre-warning zone 204 may suitably be expressed in metres or as a time interval. Purely as an example, the pre-warning zone 204 may have a width w in the range of 0-4 metres, preferably 0-3 metres, more preferably 0-2 metres, most preferably 0-1 metre. The width w is defined as the shortest distance from the side of the pre-warning zone 204 being next to the risk zone 200 to the other side of the pre-warning zone 204 facing away from the risk zone 200. If defined as a time interval, consideration is preferably taken to the velocity, which the movable unit 102, 104, 106, 108 has in the pre-warning zone 204. Purely as an example, the time interval may be 0-4 s, preferably 0-3 s, more preferably 0-2 s, most preferably 0-1 s.

Figure 3 illustrates the system 300 for selectively displaying image data in a working machine 100. The image capturing arrangement 124 of the working machine 100 is connected to the system 300, such that the image capturing arrangement 124 can feed the system 300 with image data, in particular image data of the risk zone 200. Further, the system 300 is connected to the display 128, such that the system 300 can control which image data to display. The image data itself may be sent directly from the image capturing arrangement 124 to the display 128, as is indicated by a dashed arrow in Figure 3, but what to display is controlled by the system 300.

As mentioned above, the system 300 comprises at least one position determination means 302, adapted to determine a position of a movable unit 102, 104, 106, 108. The position may be determined in relation to the ground portion 120 of the working machine 100 or as an absolute position. The position determination means 302 may e.g. comprise an angular sensor, like one of four angular sensors 130a, 130b, 130c, 130d located in the working machine 100 of Figure 1, and/or comprise a receiver adapted to receive position data from a local positioning system and/or global positioning system, such as GPS, as also mentioned above.

The system 300 further comprises a control unit 304. The control unit 304 is configured to compare the position of the movable unit 102, 104, 106, 108 to the risk zone 200 associated with the current environment of the working machine 100, and to the optional pre-warning zone 204 if being used, and to issue a signal to the working machine 100 to display image data of the risk zone 200 captured by the image capturing arrangement 124 on the display 128, when the position of the movable unit 102, 104, 106, 108 is within the risk zone 200 or in the optional pre-warning zone 204. Thereby, it is ascertained that it is possible for the operator to get a view of the risk zone 200 when desirable, i.e. when the risk is increased due to that the movable unit 102, 104, 106, 108 is within the risk zone 200 or in the optional pre-warning zone 204. Hence, even if the operator has chosen another view or information to be displayed on the display 128, the system 300 will automatically trigger display of the image data of the risk zone 200 on the display 128 in such a case. The image data may be shown on the whole display 128 or on only a portion of the display 128.

As an option, the control unit 304 may further be configured to issue a signal to the working machine 100 not to display the image data captured by the image capturing arrangement 124 on the display 128, when the position of the movable unit 102, 104, 106, 108 is outside the risk zone 200. This will help to prevent information overload of operator, since the operator is no longer exposed to this image data when the movable unit 102, 104, 106, 108 is outside the risk zone 200, and this image data is for the moment not desirable to see. As an alternative, the size of the portion of the display 128 showing the image data of the risk zone 200 may be decreased or represented by a symbol on the display 128.

The system 300 may also be connected to a communication unit 306, e.g. a radio transceiver, which is adapted to communicate with other objects in the vicinity, e.g. another working machine, a vehicle, an infra-structure element such as a traffic light or a barrier of a railway crossing or with the cloud.

Figure 4 illustrates a method 400 for selectively displaying image data in a working machine. The method 400 may be performed by the system 300 described herein. The working machine 100 comprises a movable unit 102, 104, 106, 108, which is movable in relation to the ground portion 120 of the working machine 100, for example as is described above for the excavator 100 of Figures 1 and 2. The working machine 100 further comprises an image capturing arrangement 124.

The method 400 comprises the steps of:
410: Determining a position of the movable unit 102, 104, 106, 108.
420: Comparing the position with a risk zone 200 associated with a current environment of the working machine 100.
430: Issuing a signal to the working machine 100 to display image data of the risk zone 200 captured by the image capturing arrangement 124, when the position of the movable unit 102, 104, 106, 108 is within the risk zone 200.

Step 420 is depicted as a conditional step, such that step 430 is performed if the position of the movable unit 102, 104, 106, 108 is within the risk zone 200.

By performing step 430, it is ascertained that it is possible for the operator of the working machine 100 to get a view of the risk zone 200 when desirable, i.e. when the risk is increased due to that the movable unit 102, 104, 106, 108 is within the risk zone 200. Hence, even if the operator has chosen another view or information to be displayed on the display 128, the system 300 will automatically trigger display of the image data of the risk zone 200 on the display 128 in such a case.

Step 410 may be performed by determining a position of the movable unit 102, 104, 106, 108 in relation to the ground portion 120 of the working machine 100, e.g. by means of the angular sensors described in conjunction with Figures 1 and 2. It may also comprise determining the position as an absolute position.

The method 405 may comprise the further optional step of:
405: Defining the risk zone.

The definition of the risk zone 200 may be performed by the operator inputting data to the system 300, e.g. when the working machine has reached its working position and is stationary and before the work is begun. As an alternative or a complement, data of the risk zone 200 and/or its definition may be sent to the working machine 100 from e.g. an external database and/or stored in a memory of the working machine 100. Moreover, such data may comprise positions of physical constructions, such as a road, a railroad, a sidewalk, a building, a bridge, a road construction, a cable for electricity or communication network, or a mountain wall. Further, such data may comprise information about a virtual geo-fence. As mentioned above, the risk zone 200 may be defined as a two-or three dimensional space. It is enough that the risk zone 200 is delimited at the side facing the working machine 100, although it is also possible to define the risk zone as a delimited two-or three dimensional space, such as the space occupied by the physical construction plus an optional safety margin.

In case there is defined a pre-warning zone 204 surrounding at least a part of the risk zone 200, cf. Figures 1 and 2 above, the method 400 may comprise the further steps of:
440: Comparing the position of the movable unit 102, 104, 106, with the pre-warning zone 204, and
450: Issuing a signal to the working machine 100 to display image data of the risk zone 200 captured by the image capturing arrangement 124, when the position of the movable unit 102, 104, 106, 108 is within the pre-warning zone 204.

Step 440 is depicted as a conditional step, such that step 450 is performed if the position of the movable unit 102, 104, 106, 108 is within the pre-warning zone 204.

Optionally, the method 400 may further comprise the additional optional step of:
435: Defining the pre-warning zone 204.

Step 435 may be performed in a corresponding way as for the risk zone described above.

In case there is a pre-warning zone 204 surrounding at least a part of the risk zone 200, it is preferred that the steps 420, 440 of comparing the position and the steps 430, 450 of issuing the signal to display image data are performed in parallel for the risk zone 200 and the pre-warning zone 204.

As yet an option, the method 400 may comprise the further step of:
460: Issuing a signal to the working machine 100 not to display image data captured by the image capturing arrangement 124 on the display 128, when the position of the movable unit 102, 104, 106, 108 is outside the risk zone 200.

If a pre-warning zone 204 is defined, the method 400 may comprise the further step of: 460': Issuing a signal to the working machine 100 not to display image data captured by the image capturing arrangement 124 on the display 128, when the position of the movable unit 102, 104, 106, 108 is outside the risk zone 200 and also outside the pre-warning zone 204.

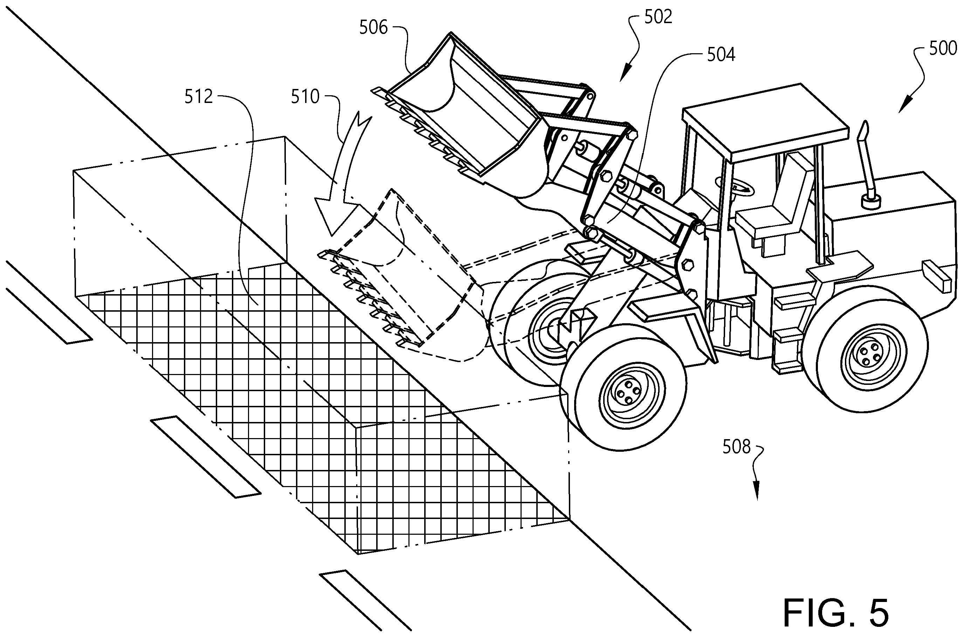

The system 300 and method 400 described above are also useful in other kinds of working machines than the excavator 100 described in conjunction with Figures 1-2, such as in a wheel loader 500, see Figure 5.

The wheel loader 500 comprises a load unit arrangement 502 having a boom arm 504 and an implement 506 in the form of a bucket. The load unit arrangement 502 is movable such that the implement 506 can be lifted/lowered relative to the ground surface 508 in front of the body structure of the wheel loader 500, i.e. the implement 506 is vertically movable, at least partly through vertical rotation. Hence, the load unit arrangement 502, the boom arm 504 and the implement 506 are examples of movable units, which are movable in relation to the ground portion of the wheel loader, in this case the main portion of the wheel loader 500. The load unit arrangement 502 is movable from the current position to a future position, indicated by dashed lines, which is closer to the ground surface 508 as compared to the present position. The movement is indicated by the arrow 510. When moving the load unit arrangement 502, there is a risk that a part of the load unit arrangement 502 could enter a risk zone 512, corresponding to the risk zone 200 described above in conjunction with Figures 1 and 2. In Figure 5, the risk zone 512 is defined as a three-dimensional space. As an alternative, the risk zone may be defined as its two-dimensional projection on the ground surface 508. Correspondingly to the embodiment illustrated in Figures 1 and 2, there may be a pre-warning zone, which is however not illustrated in Figure 5. The wheel loader 500 is provided with a system 300 for selectively displaying image data in a working machine, which system 300 operates in a corresponding way as for the system 300 of the excavator 100 described in conjunction with Figures 1 and 2.

Another example of a load unit arrangement making a vertical movement including a vertical rotation is a in a working machine in the form of a dump truck, not illustrated, provided with the system 300 as described herein. The dump truck comprises a load unit arrangement in the form of a container which is lifted and lowered by means of hydraulic cylinders. The container can be tilted relative to a tilt axis, e.g. to release a load which is present in the container. An end of the container is thereby raised to a high position, a movement which may interfere with a risk zone or an optional pre-warning zone. The system 300 operates in a corresponding way as for the excavator 100 of Figures 1 and 2.

Yet another example is illustrated in Figure 6 showing a truck 600 equipped with a load unit arrangement, in the form of a movable crane 602, and the system 300 as described herein. It is also feasible to add an implement to the crane 602. The crane 602 is movable in three dimensions in relation to the rest of the truck 600, which forms the ground portion, by means of pivotal rotation in one or more of the joints between the arm portions of the crane 602. When moving the crane 602, there is a risk that it will enter a risk zone 604, corresponding to the risk zone 200 described above in conjunction with Figures 1 and 2. In Figure 6, the risk zone 604 is defined as a three-dimensional space. The risk zone 604 is located entirely above a ground surface 606 and comprises an overhead electric cable 608, which would be dangerous if the crane 602 would hit. Correspondingly to the embodiment illustrated in Figures 1 and 2, there may be a pre-warning zone, however not illustrated in Figure 6. The system 300 operates in a corresponding way as for the excavator 100 of Figures 1 and 2.

It is to be understood that the present invention is not limited to the embodiments described above and illustrated in the drawings; rather, the skilled person will recognize that many changes and modifications may be made within the scope of the appended claims.

## Claims

1. A system (300) for selectively displaying image data in a working machine (100, 500, 600),
said working machine (100, 500, 600) comprising a movable unit (102, 104, 106, 108, 502, 504, 506, 602), which is movable in relation to a ground portion (120) of said working machine (100, 500, 600),
said working machine (100, 500, 600) further comprising an image capturing arrangement (124) and a display (128) adapted to display image data captured by said image capturing arrangement (124),
said system (300) comprising a position determination means (302), adapted to determine a position of said movable unit (102, 104, 106, 108, 502, 504, 506, 602),
**characterized in that**
said system (300) further comprises a control unit (304) configured to compare said position of said movable unit (102, 104, 106, 108, 502, 504, 506, 602) to a risk zone (200, 202) associated with a current environment of said working machine (100, 500, 600) and to issue a signal to said working machine (100, 500, 600) to display image data of said risk zone (200, 202) captured by said image capturing arrangement (124) on said display (128), when said position of said movable unit (102, 104, 106, 108, 502, 504, 506, 602) is within said risk zone (200, 202),
wherein said control unit (304) further is configured to issue a signal to said working machine (100, 500, 600) not to display image data captured by said image capturing arrangement (124) on said display (128), when said position of said movable unit (102, 104, 106, 108, 502, 504, 506, 602) is outside said risk zone (200, 202).

2. The system (300) according to claim 1, wherein said position determination means (302) comprises, or is constituted, by an angular sensor (130a, 130b, 130c, 130d) adapted to determine an angular position of said movable unit (102, 104, 106, 108, 502, 504, 506, 602), e.g. in relation to said ground portion (120) of said working machine (100, 500, 600).

3. The system (300) according to claim 1 or 2, wherein said position determination means (302) comprises, or is constituted, by a receiver adapted to receive position data from a local positioning system (300) and/or global positioning system (300).

4. The system (300) according to any one of the preceding claims, said control unit of said system (300) in addition being configured to compare said position of said movable unit (102, 104, 106, 108, 502, 504, 506, 602) to a pre-warning zone (204, 206) surrounding at least a part of said risk zone (200, 202), and to issue a signal to said working machine (100, 500, 600) to display image data of said risk zone (200, 202) captured by said image capturing arrangement (124) on said display (128), when said position of said movable unit (102, 104, 106, 108, 502, 504, 506, 602) is within said pre-warning zone (204, 206).

5. The system (300) according to any one of the preceding claims, wherein said risk zone (200, 202) is defined as a two- and/or a three-dimensional space.

6. The system (300) according to any one of the preceding claims, wherein said risk zone (200, 202) is defined by means (302) of an object having a pre-definable/pre-defined position, e.g. a physical construction or a virtual geo-fence.

7. A working machine (100, 500, 600) comprising a ground portion (120), a movable unit (102, 104, 106, 108, 502, 504, 506, 602), which is movable in relation to said ground portion (120), a display (128), an image capturing arrangement (124) and the system (300) for selectively displaying image data according to any one of the preceding claims.

8. The working machine (100, 500, 600) according to claim 7, wherein said movable unit (102, 104, 106, 108, 502, 504, 506, 602) is movable in two and/or three dimensions in relation to said ground portion (120) of the working machine (100, 500, 600), e.g. by rotation.

9. A method (400) for selectively displaying image data in a working machine (100, 500, 600), said working machine (100, 500, 600) comprising a movable unit (102, 104, 106, 108, 502, 504, 506, 602), which is movable in relation to a ground portion (120) of said working machine (100, 500, 600) and an image capturing arrangement (124),
said method (400) being **characterized by** the steps of:
- determining (410) a position of said movable unit (102, 104, 106, 108, 502, 504, 506, 602),
- comparing (420) said position of said movable unit (102, 104, 106, 108, 502, 504, 506, 602) with a risk zone (200, 202) associated with a current environment of said working machine (100, 500, 600),
- issuing a signal (430) to said working machine (100, 500, 600) to display image data of said risk zone (200, 202) captured by said image capturing arrangement (124), when said position of said movable unit (102, 104, 106, 108, 502, 504, 506, 602) is within said risk zone (200, 202), and
- issuing a signal (460) to said working machine (100, 500, 600) not to display image data captured by said image capturing arrangement (124) on said display (128), when said position of said movable unit (102, 104, 106, 108, 502, 504, 506, 602) is outside said risk zone (200, 202).

10. The method according to claim 9, **characterized by** the further step of:
- defining said risk zone (200, 202).

11. The method (400) according to claim 10 in case there is defined a pre-warning zone (204, 206) surrounding at least a part of said risk zone (200, 202), wherein said method is **characterized by** the further steps of:
- comparing (440) said position of said movable unit (102, 104, 106, 108, 502, 504, 506, 602) with said pre-warning zone (204, 206),
- issuing a signal (450) to said working machine (100, 500, 600) to display image data of said risk zone (200, 202) captured by said image capturing arrangement (124), when said position of said movable unit (102, 104, 106, 108, 502, 504, 506, 602) is within said pre-warning zone (204, 206).

12. A computer program comprising program code means (302) for performing the steps of any one of claims 9-11, when said program is run on a system as claimed in any one of claims 1 to 6.

13. A computer readable medium carrying a computer program as defined in claim 12.

## Patentansprüche

1. System (300) zur selektiven Darstellung von Bilddaten in einer Arbeitsmaschine (100, 500, 600),
die Arbeitsmaschine (100, 500, 600) umfassend eine bewegliche Einheit (102, 104, 106, 108, 502, 504, 506, 602), die in Bezug auf einen Bodenabschnitt (120) der Arbeitsmaschine (100, 500, 600) beweglich ist,
die Arbeitsmaschine (100, 500, 600) ferner umfassend eine Bilderfassungsanordnung (124) und eine Anzeige (128), die zur Darstellung von durch die Bilderfassungsanordnung (124) erfassten Bilddaten angepasst ist,
das System (300) umfassend ein Positionsbestimmungsmittel (302), das angepasst ist, um eine Position der beweglichen Einheit (102, 104, 106, 108, 502, 504, 506, 602) zu bestimmen,
**dadurch gekennzeichnet, dass**
das System (300) ferner eine Steuereinheit (304) umfasst, die konfiguriert ist, um die Position der beweglichen Einheit (102, 104, 106, 108, 502, 504, 506, 602) mit einer Risikozone (200, 202) zu vergleichen, die mit einer aktuellen Umgebung der Arbeitsmaschine (100, 500, 600) verbunden ist, und ein Signal an die Arbeitsmaschine (100, 500, 600) auszugeben, um Bilddaten der Risikozone (200, 202), die von der Bilderfassungsanordnung (124) erfasst wurden, auf der Anzeige (128) darzustellen, wenn die Position der beweglichen Einheit (102, 104, 106, 108, 502, 504, 506, 602) innerhalb der Risikozone (200, 202) liegt,
wobei die Steuereinheit (304) ferner konfiguriert ist, um ein Signal an die Arbeitsmaschine (100, 500, 600) auszugeben, um die von der Bilderfassungsanordnung (124) erfassten Bilddaten nicht auf dem Display (128) darzustellen, wenn die Position der beweglichen Einheit (102, 104, 106, 108, 502, 504, 506, 602) außerhalb der Risikozone (200, 202) liegt.

2. System (300) nach Anspruch 1, wobei das Positionsbestimmungsmittel (302) einen Winkelsensor (130a, 130b, 130c, 130d) umfasst oder daraus besteht, der angepasst ist, um eine Winkelposition der beweglichen Einheit (102, 104, 106, 108, 502, 504, 506, 602) zu bestimmen, z.B. in Bezug auf den Bodenabschnitt (120) der Arbeitsmaschine (100, 500, 600).

3. System (300) nach Anspruch 1 oder 2, wobei das Positionsbestimmungsmittel (302) einen Empfänger umfasst oder aus einem solchen besteht, der angepasst ist, um Positionsdaten von einem lokalen Positionierungssystem (300) und/oder einem globalen Positionierungssystem (300) zu empfangen.

4. System (300) nach einem der vorhergehenden Ansprüche, wobei die Steuereinheit des Systems (300) zusätzlich konfiguriert ist, um die Position der beweglichen Einheit (102, 104, 106, 108, 502, 504, 506, 602) mit einer Vorwarnzone (204, 206) zu vergleichen, die zumindest einen Teil der Risikozone (200, 202) umgibt, und ein Signal an die Arbeitsmaschine (100, 500, 600) auszugeben, um Bilddaten der Risikozone (200, 202), die von der Bilderfassungsanordnung (124) erfasst wurden, auf der Anzeige (128) darzustellen, wenn die Position der beweglichen Einheit (102, 104, 106, 108, 502, 504, 506, 602) innerhalb der Vorwarnzone (204, 206) liegt.

5. System (300) nach einem der vorhergehenden Ansprüche, wobei die Risikozone (200, 202) als ein zwei- und/oder dreidimensionaler Raum definiert ist.

6. System (300) nach einem der vorhergehenden Ansprüche, wobei die Risikozone (200, 202) durch Mittel (302) eines Objekts mit einer vordefinierbaren/vordefinierten Position, z.B. eine physische Konstruktion oder einen virtuellen Geo-Zaun, definiert ist.

7. Arbeitsmaschine (100, 500, 600) umfassend einen Bodenabschnitt (120), eine bewegliche Einheit (102, 104, 106, 108, 502, 504, 506, 602), die in Bezug auf den Bodenabschnitt (120) beweglich ist, einer Anzeige (128), einer Bilderfassungsanordnung (124) und dem System (300) zur selektiven Darstellung von Bilddaten nach einem der vorhergehenden Ansprüche.

8. Arbeitsmaschine (100, 500, 600) nach Anspruch 7, wobei die bewegliche Einheit (102, 104, 106, 108, 502, 504, 506, 602) in Bezug auf den Bodenabschnitt (120) der Arbeitsmaschine (100, 500, 600) zwei- und/oder dreidimensional beweglich ist, z.B. durch Drehung.

9. Verfahren (400) zur selektiven Darstellung von Bilddaten in einer Arbeitsmaschine (100, 500, 600), die Arbeitsmaschine (100, 500, 600) umfassend eine bewegliche Einheit (102, 104, 106, 108, 502, 504, 506, 602), die in Bezug auf einen Bodenabschnitt (120) der Arbeitsmaschine (100, 500, 600) beweglich ist, und eine Bilderfassungsanordnung (124), wobei das Verfahren (400) durch die folgenden Schritte gekennzeichnet ist:
- Bestimmen (410) einer Position der beweglichen Einheit (102, 104, 106, 108, 502, 504, 506, 602),
- Vergleichen (420) der Position der beweglichen Einheit (102, 104, 106, 108, 502, 504, 506, 602) mit einer Risikozone (200, 202), die mit einer aktuellen Umgebung der Arbeitsmaschine (100, 500, 600) verbunden ist,
- Ausgeben eines Signals (430) an die Arbeitsmaschine (100, 500, 600), um Bilddaten der Risikozone (200, 202) darzustellen, die von der Bilderfassungsanordnung (124) erfasst wurden, wenn die Position der beweglichen Einheit (102, 104, 106, 108, 502, 504, 506, 602) innerhalb der Risikozone (200, 202) liegt, und
- Ausgeben eines Signals (460) an die Arbeitsmaschine (100, 500, 600), um von der Bilderfassungsanordnung (124) erfasste Bilddaten nicht auf der Anzeige (128) darzustellen, wenn die Position der beweglichen Einheit (102, 104, 106, 108, 502, 504, 506, 602) außerhalb der Risikozone (200, 202) liegt.

10. Verfahren nach Anspruch 9, **gekennzeichnet durch** den weiteren Schritt:
- Definieren der Risikozone (200, 202).

11. Verfahren (400) nach Anspruch 10 für den Fall, dass eine Vorwarnzone (204, 206) definiert ist, die zumindest einen Teil der Risikozone (200, 202) umgibt, wobei das Verfahren durch die folgenden weiteren Schritte gekennzeichnet ist:
- Vergleichen (440) der Position der beweglichen Einheit (102, 104, 106, 108, 502, 504, 506, 602) mit der Vorwarnzone (204, 206),
- Ausgeben eines Signals (450) an die Arbeitsmaschine (100, 500, 600), um Bilddaten der Risikozone (200, 202) darzustellen, die von der Bilderfassungsanordnung (124) erfasst wurden, wenn die Position der beweglichen Einheit (102, 104, 106, 108, 502, 504, 506, 602) innerhalb der Vorwarnzone (204, 206) liegt.

12. Computerprogramm umfassend Programmcodemittel (302) zur Durchführung der Schritte nach einem der Ansprüche 9-11, wenn das Programm auf einem System nach einem der Ansprüche 1-6 ausgeführt wird.

13. Computerlesbares Medium mit einem Computerprogramm nach Anspruch 12.

## Revendications

1. Système (300) d'afficheur sélectif de données d'image dans une machine de travail (100, 500, 600),
ladite machine de travail (100, 500, 600) comprenant une unité mobile (102, 104, 106, 108, 502, 504, 506, 602), qui est mobile par rapport à une partie de sol (120) de ladite machine de travail (100, 500, 600),
ladite machine de travail (100, 500, 600) comprenant en outre un dispositif de capture d'images (124) et un afficheur (128) conçu pour afficher des données d'image capturées par ledit dispositif de capture d'images (124),
ledit système (300) comprenant un moyen de détermination de position (302), adapté pour déterminer une position de ladite unité mobile (102, 104, 106, 108, 502, 504, 506, 602),
**caractérisé en ce que**
ledit système (300) comprend en outre une unité de commande (304) configurée pour comparer ladite position de ladite unité mobile (102, 104, 106, 108, 502, 504, 506, 602) à une zone à risque (200, 202) associée à un environnement actuel de ladite machine de travail (100, 500, 600) et pour émettre un signal vers ladite machine de travail (100, 500, 600) pour afficher des données d'image de ladite zone à risque (200, 202) capturées par ledit dispositif de capture d'image (124) sur ledit afficheur (128), lorsque ladite position de ladite unité mobile (102, 104, 106, 108, 502, 504, 506, 602) se trouve dans ladite zone à risque (200, 202),
ladite unité de commande (304) étant en outre configurée pour émettre un signal vers ladite machine de travail (100, 500, 600) pour ne pas afficher les données d'image capturées par ledit dispositif de capture d'images (124) sur ledit afficheur (128) lorsque ladite position de ladite unité mobile (102, 104, 106, 108, 502, 504, 506, 602) est en dehors de ladite zone à risque (200, 202) .

2. Système (300) selon la revendication 1, dans lequel ledit moyen de détermination de position (302) comprend, ou est constitué par, un capteur angulaire (130a, 130b, 130c, 130d) adapté pour déterminer une position angulaire de ladite unité mobile (102, 104, 106, 108, 502, 504, 506, 602), par exemple par rapport à ladite partie de sol (120) de ladite machine de travail (100, 500, 600).

3. Système (300) selon la revendication 1 ou 2, dans lequel ledit moyen de détermination de position (302) comprend, ou est constitué par, un récepteur adapté pour recevoir des données de position d'un système de positionnement local (300) et/ou d'un système de positionnement global (300).

4. Système (300) selon l'une quelconque des revendications précédentes, ladite unité de commande dudit système (300) étant en outre configurée pour comparer ladite position de ladite unité mobile (102, 104, 106, 108, 502, 504, 506, 602) à une zone de pré-avertissement (204, 206) entourant au moins une partie de ladite zone à risque (200, 202), et pour émettre un signal vers ladite machine de travail (100, 500, 600) pour afficher des données d'image de ladite zone à risque (200, 202) capturées par ledit dispositif de capture d'images (124) sur ledit afficheur (128), lorsque ladite position de ladite unité mobile (102, 104, 106, 108, 502, 504, 506, 602) se trouve dans ladite zone de pré-avertissement (204, 206).

5. Système (300) selon l'une quelconque des revendications précédentes, dans lequel ladite zone à risque (200, 202) est définie comme un espace à deux et/ou à trois dimensions.

6. Système (300) selon l'une quelconque des revendications précédentes, dans lequel ladite zone à risque (200, 202) est définie au moyen (302) d'un objet ayant une position prédéfinissable/prédéfinie, par exemple une structure physique ou une barrière géographique virtuelle.

7. Machine de travail (100, 500, 600) comprenant une partie de sol (120), une unité mobile (102, 104, 106, 108, 502, 504, 506, 602), qui est mobile par rapport à ladite partie de sol (120), un afficheur (128), un agencement de capture d'image (124) et le système (300) pour afficher sélectivement des données d'image selon l'une quelconque des revendications précédentes.

8. Machine de travail (100, 500, 600) selon la revendication 7, dans laquelle ladite unité mobile (102, 104, 106, 108, 502, 504, 506, 602) est mobile dans deux et/ou trois dimensions par rapport à ladite partie de sol (120) de la machine de travail (100, 500, 600), par exemple par rotation.

9. Procédé (400) pour afficher sélectivement des données d'image dans une machine de travail (100, 500, 600), ladite machine de travail (100, 500, 600) comprenant une unité mobile (102, 104, 106, 108, 502, 504, 506, 602) qui est mobile par rapport à une partie de sol (120) de ladite machine de travail (100, 500, 600), et un dispositif de capture d'images (124), ledit procédé (400) étant **caractérisé par** les étapes consistant à :
- déterminer (410) une position de ladite unité mobile (102, 104, 106, 108, 502, 504, 506, 602),
- comparer (420) ladite position de ladite unité mobile (102, 104, 106, 108, 502, 504, 506, 602) avec une zone à risque (200, 202) associée à un environnement actuel de ladite machine de travail (100, 500, 600),
- émettre un signal (430) vers ladite machine de travail (100, 500, 600) pour afficher des données d'image de ladite zone à risque (200, 202) capturées par ledit dispositif de capture d'images (124), lorsque ladite position de ladite unité mobile (102, 104, 106, 108, 502, 504, 506, 602) se trouve dans ladite zone à risque (200, 202), et
- émettre un signal (460) vers ladite machine de travail (100, 500, 600) pour ne pas afficher les données d'image capturées par ledit dispositif de capture d'images (124) sur ledit afficheur (128), lorsque ladite position de ladite unité mobile (102, 104, 106, 108, 502, 504, 506, 602) est en dehors de ladite zone à risque (200, 202).

10. Procédé selon la revendication 9, **caractérisé par** l'étape supplémentaire consistant à :
- définir ladite zone à risque (200, 202).

11. Procédé (400) selon la revendication 10, dans le cas où est définie une zone de pré-avertissement (204, 206) entourant au moins une partie de ladite zone à risque (200, 202), dans lequel ledit procédé est **caractérisé par** les étapes supplémentaires consistant à :
- comparer (440) ladite position de ladite unité mobile (102, 104, 106, 108, 502, 504, 506, 602) avec ladite zone de pré-avertissement (204, 206),
- émettre un signal (450) vers ladite machine de travail (100, 500, 600) pour afficher des données d'image de ladite zone à risque (200, 202) capturées par ledit dispositif de capture d'image (124), lorsque ladite position de ladite unité mobile (102, 104, 106, 108, 502, 504, 506, 602) se trouve dans ladite zone de pré-avertissement (204, 206).

12. Programme informatique comprenant un moyen de code de programme (302) pour exécuter les étapes de l'une quelconque des revendications 9 à 11, lorsque ledit programme est exécuté sur un système selon l'une quelconque des revendications 1 à 6.

13. Support lisible par ordinateur comportant un programme informatique tel que défini dans la revendication 12.
